# EUROPÄISCHE PATENTSCHRIFT

(11) **EP 2 981 926 B1**
(45) Veröffentlichungstag und Bekanntmachung des Hinweises auf die Patenterteilung: **24.07.2019**
(21) Anmeldenummer: 14728183.6
(22) Anmeldetag: 04.06.2014
(51) Int. Cl.: G06F 21/60, G06F 21/79

(54) **DATENSPEICHERVORRICHTUNG ZUM GESCHÜTZTEN DATENAUSTAUSCH ZWISCHEN VERSCHIEDENEN SICHERHEITSZONEN**
DATA STORAGE DEVICE FOR PROTECTED DATA EXCHANGE BETWEEN DIFFERENT SECURITY ZONES
DISPOSITIF DE STOCKAGE DE DONNÉES PERMETTANT UN ÉCHANGE DE DONNÉES PROTÉGÉ ENTRE DIFFÉRENTES ZONES DE SÉCURITÉ

(30) Priorität: 27.06.2013 DE 102013212525
(43) Veröffentlichungstag der Anmeldung: 10.02.2016
(73) Patentinhaber: Siemens Mobility GmbH, 81739 München (DE)
(72) Erfinder: FALK, Rainer, 85586 Poing (DE)
(86) Internationale Anmeldenummer: PCT/EP2014/061540
(87) Internationale Veröffentlichungsnummer: WO 2014/206695

(56) Entgegenhaltungen:
- WO-A1-2012/045984

## Beschreibung

Die Erfindung betrifft eine Datenspeichervorrichtung zum geschützten Datenaustausch zwischen verschiedenen Sicherheitszonen mit mindestens einer Speichereinheit, einer Datenvalidierungseinheit und einer Zugriffskontrolleinheit.

In speziellen Bereichen, wie Behördenkommunikation, in denen hohe Sicherheitsanforderungen gelten und in denen eine Sicherheits-Klassifikation von Dokumenten und Informationen vorliegen, sind sogenannte Cross-Domain-Lösungen bekannt, durch die ein automatisierter und sicherer Austausch von Dokumenten und Nachrichten, beispielsweise E-Mails, zwischen Sicherheitszonen mit unterschiedlich hohem Sicherheitsgrad realisiert wird.

Für die Kopplung von industriellen Steuerungsnetzen mit einem Büronetzwerk, dem öffentlichen Internet oder anderen Steuerungsnetzwerken werden bisher herkömmliche Firewalls verwendet, die die Datenkommunikation filtern. Eine Datenkommunikation wird dabei abhängig von der Adresse der Kommunikationspartner und dem verwendeten Kommunikationsprotokoll zugelassen oder geblockt. Auch ist es üblich, eine Netzwerkverbindung über einen Applikationsproxyserver zu führen, der die TCP-Verbindung terminiert.

In der WO 2012/170485 wird eine Cross Domain Security Lösung auf Basis einer Virtualisierungslösung realisiert, bei der eine virtuelle Maschine den Informationstransfer zwischen zwei Informationsdomänen mit unterschiedlicher Sicherheitsstufe kontrolliert. Ein solches System umfasst eine Rechnervorrichtung mit einer Überwachungs-Einheit für virtuelle Maschinen (VMM), die eine erste virtuelle Maschine für eine erste Informationsdomäne, eine zweite virtuellen Maschine für eine zweite Informationsdomäne und eine virtuellen Maschine für eine Cross Domain Lösung steuert. Die virtuelle Maschine für die Cross Domain Lösung steuert den Informationsaustausch zwischen der ersten und der zweiten Informationsdomäne beziehungsweise die entsprechenden virtuellen Maschinen.

In der WO 2012/045984 A1 wird eine Vorrichtung zum sicheren Transfer von Daten zwischen zwei Computersystemen beschrieben. Dabei wird eine Datei vom ersten Computersystem auf ein erstes Dateimanagementmodul der Datentransfervorrichtung geschrieben, von dort an ein internes Verifikationsmodul übergeben und geprüft und von dort abhängig vom Prüfergebnis an ein zweites Dateimanagementmodul zum Auslesen durch das zweite Computersystem übergeben.

Für den Datenaustausch zwischen einem Büronetzwerk oder einem Servicegerät mit einem Steuerungsnetzwerk oder einem Steuergerät, beispielsweise zum Verteilen von neuen Programmen oder Anweisungen, sind aufwendige Lösungen mit zwischengeschalteter Firewall oder Virtualisierungslösung nicht praktikabel, insbesondere wenn über viele verteilte Schnittstellen Daten über unterschiedliche Sicherheitszonen hinweg ausgetauscht werden sollen.

Daher ist es die Aufgabe der vorliegenden Erfindung, eine einfach realisierbare und anwendbare Lösung zum Datenaustausch beispielsweise mit einem Steuernetzwerk oder einem Steuergerät zu schaffen, die rückwirkungsfrei und robust gegenüber Angriffen ist. Die Lösung soll dabei insbesondere in ein einzelnes Steuergerät integrierbar sein oder als Datenschleuse zwischen zwei Sicherheitszonen eines Steuerungssystems realisierbar sein.

Die Aufgabe wird durch die in dem unabhängigen Anspruch beschriebenen Maßnahmen gelöst. In den Unteransprüchen sind vorteilhafte Weiterbildungen der erfindungsgemäßen Datenspeichervorrichtung dargestellt.

Die erfindungsgemäße Datenspeichervorrichtung zum geschützten Datenaustausch zwischen verschiedenen Sicherheitszonen umfasst mindestens eine Speichereinheit, eine Datenvalidierungseinheit und eine Zugriffskontrolleinheit. Die Speichereinheit weist eine erste Schnittstelle zu einer ersten Sicherheitszone auf, über die Datenelemente auf die Speichereinheit nur schreibbar sind. Die Speichereinheit weist des Weiteren eine zweite Schnittstelle zu einer zweiten Sicherheitszone auf, über die Datenelemente von der Speichereinheit nur auslesbar sind. Die Validierungseinheit ist eingerichtet um die auf die Speichereinheit geschriebenen Datenelemente auf Übereinstimmung mit einem vorbestimmten Muster zu überprüfen. Die Zugriffskontrolleinheit ist eingerichtet um ein Auslesen der Datenelemente aus der Speichereinheit erst dann zu ermöglichen, wenn die Datenelemente als übereinstimmend befunden und somit gültig validiert sind.

Durch die Ausführung der Datenvalidierung auf einer Datenspeichervorrichtung, d.h. auf einer Hardwarekomponente, kann eine Validierung mit hoher Zuverlässigkeit gegen Manipulation erfolgen. Durch jeweils eine separate Schnittstelle zu den unterschiedlichen Sicherheitszonen kann die erfindungsgemäße Datenspeichervorrichtung in einfacher Weise zwischengeschaltet werden. Die Datenspeichervorrichtung ist einfach aufgebaut und daher relativ preiswert, insbesondere im Vergleich zu den bisher bekannten Cross Domain Lösungen, realisierbar. Die erfindungsgemäße Datenspeichervorrichtung kann zwischen beliebigen Sicherheitszonen bzw. den entsprechenden Netzwerken zwischengeschaltet werden und ist nicht auf eine spezielle Umgebung beschränkt. Jede Sicherheitszone kann dabei als geschlossenes Netzwerk betrieben werden, da keine Netzwerckommunikation realisiert wird. Es werden lediglich ausgewählte projektierbare Datenelemente auf der anderen Seite bereitgestellt, soweit eine Datenvalidierung keine Auffälligkeiten ergeben hat. Ebenso wird Rückwirkungsfreiheit im Datenaustausch von einem externen Netzwerk auf ein geschlossenes Netzwerk gewährleistet. Zusätzliche Datenelemente werden nicht erzeugt, da lediglich auf die Datenspeichervorrichtung eingelesene Datenelemente weitergegeben werden, sodass keine zusätzlichen Datenelemente in die erste Sicherheitszone zurück übermittelt werden.

Die Speichereinheit weist eine Vielzahl von Speicherzellen auf, wobei jeder Speicherzelle eine Überprüfungskennung zuordenbar ist und lediglich einer Speicherzelle mit gültig validiertem Datenelement eine Validierungskennung zugeordnet wird. Die Speicherzelle ist nur bei einer zugeordneten Validierungskennung für einen lesenden Zugriff freigegeben.

Dies hat den Vorteil, dass lediglich eine Speichereinheit für die Datenspeichervorrichtung erforderlich ist und diese somit sehr kompakt und kostengünstig realisiert werden kann.

In einer alternativen, nicht erfindungsgemäßen Ausführungsform weist die Speichereinheit eine erste Speicherkomponente auf, die bezüglich der ersten Schnittstelle einen nur schreibenden Zugriff erlaubt und die geschriebenen Datenelemente an die Validierungseinheit weitergibt. Die Speichereinheit weist des Weiteren eine zweite Speicherkomponente auf, die Datenelemente von der Validierungseinheit einliest und bezüglich der zweiten Schnittstelle einen nur lesenden Zugriff erlaubt.

Dies hat die Vorteile, dass der Datenaustausch durch eine einfache Standardprozedur, nämlich einfaches Umkopieren der Datenelemente, erfolgt. Bei einer nicht erfolgreichen Datenvalidierung ist eine Bereinigung der Datenelemente sehr einfach möglich.

Weiterhin ist es vorteilhaft, wenn die Datenspeichervorrichtung mehrere Speicherbereiche umfasst, ein Speicherbereich mindestens eine Speichereinheit und/oder eine Validierungseinheit und/oder eine Zugriffseinheit umfasst und jeder Speicherbereich Datenelemente in jeweils unterschiedliche Richtung transportiert. Die mindestens eine Validierungseinheit prüft die Datenelemente für jede Richtung auf Übereinstimmung mit einem eigenen von der Gegenrichtung beziehungsweise den anderen Richtungen unabhängigen Muster.

Somit ist ein sicherer manipulationsgeschützter Datenaustausch in unterschiedliche Richtungen insbesondere in Hin- und Rückrichtung unabhängig voneinander möglich.

In einem vorteilhaften Ausführungsbeispiel weisen die Speicherbereiche eine unterschiedliche Speicherkapazität auf. Dadurch kann die Datenspeichervorrichtung für einen nicht symmetrischen Datenfluss in verschiedene Richtungen kapazitätsmäßig optimiert werden.

In einer Ausführungsform stellt die Zugriffskontrolleinheit einen Ersatzwert oder einen ungültigen Wert oder eine Zusatzinformation für ein geschriebenes Datenelement bereit, dessen Wert als ungültig validiert wurde. Dies hat den Vorteil, dass ein kompletter Datensatz trotz eines ungültig validierten Datenelements ausgelesen werden kann und ein Steuergerät beispielsweise mit dem letzten gültigen Wert vor der Datenübertragung oder einem Mittelwert über die letzten gültigen Werte als Ersatzwert weiterarbeiten kann.

In einer anderen Ausführungsform sperrt die Zugriffskontrolleinheit den lesenden Zugriff auf ein Datenelement, wenn dieses Datenelement als ungültig validiert wurde. Dies hat den Vorteil, dass keine ungültigen, beispielsweise korrumpierten, Datenelemente in die zweite Sicherheitszone ausgelesen werden und somit dort auch keine Schadwirkung entfalten können.

In einer Ausführungsform behandelt die Zugriffskontrolleinheit bei einem oder einer bestimmten Anzahl als ungültig validierten Datenelement alle oder einen Teil der als gültig validierten Datenelemente in gleicher Weise wie das als ungültig validierte Datenelement. Somit können alle Datenelemente die Daten einer Datei enthalten mit einem vorbestimmten Wert belegt werden, wenn auch nur ein einziges Datenelement der Datei ungültig ist. Dadurch wird erreicht, dass ein in sich konsistenter Gesamtdatensatz aus mehreren Speicherzellen bereitgestellt wird.

In einer vorteilhaften Ausführungsform deaktiviert die Zugriffskontrolleinheit die komplette Datenspeichervorrichtung, wenn ein oder mehrere geschriebene Datenelemente als ungültig validiert wurden.

In einer anderen Ausführungsform sperrt die Zugriffskontrolleinheit den schreibenden Zugriff auf die Speichereinheit, wenn ein oder mehrere Datenelemente als ungültig validiert wurden. Diese Sperre des schreibenden Zugriffs kann für alle oder bestimmte Zugreifende gelten.

In einem weiteren Ausführungsbeispiel veranlasst die Zugriffskontrolleinheit bei einem oder mehreren als ungültig validierten Datenelementen ein Zurücksetzen der Speicherzelle, in dem das ungültig validierte Datenelement gespeichert ist oder sie veranlasst ein Zurücksetzen eines Teilbereichs oder sie veranlasst ein Zurücksetzen aller Speicherzellen der Speichereinheit. Somit werden die "infizierten" Speicherzellen der Speichereinheit sofort bereinigt, sodass auch nachfolgend kein Schaden entstehen kann.

In einer vorteilhaften Ausführungsform ist an der Datenspeichervorrichtung eine dritte Schnittstelle ausgebildet, die von der ersten Sicherheitszone aus zugänglich ist und die die über die erste Schnittstelle von der ersten Sicherheitszone auf die Speichereinheit geschriebenen Datenelemente dupliziert und ausliest. Dadurch ist es möglich geschriebene Datenwerte innerhalb einer Sicherheitszone abzuhören, ohne jedoch die Kommunikation innerhalb der Sicherheitszone und zwischen den Sicherheitszonen zu beeinflussen.

In einer vorteilhaften Ausführungsform ist ein geschriebenes Datenelement als Aktorwert ausgebildet. Dieses in eine Steuerungsumgebung ausgelesene Datenelement ist dort direkt als Eingabe anwendbar. Dies hat den Vorteil, dass zum Beispiel durch einen Internet-Dienst ein Datenwert bereitgestellt werden kann ohne jedoch dazu eine Netzwerkkommunikation zu benötigen. Dadurch ist eine als Sicherheitszone ausgebildete Steuerungsumgebung ein geschlossenes Netzwerk.

In einer weiteren Ausführungsform ist die Validierungseinheit eingerichtet um mehrere unterschiedliche Muster zu speichern und/oder zu laden. Dies ermöglicht eine umfangreiche auf mehrere Kriterien ausgerichtete Validierung.

In einer vorteilhaften Ausführungsform validiert die Validierungseinheit Datenelemente gegenüber mehreren Mustern und die Zugriffskontrolleinheit erlaubt nur dann einen lesenden Zugriff, wenn mindestens ein oder eine bestimmte Mindestanzahl von Mustern oder eine logische Kombination von Mustern gültig validiert sind.

In einer Ausführungsform ist ein Muster ein Format oder Dateityp oder ein Wertebereich oder eine gültige Prüfsumme oder eine Übereinstimmung von Abhängigkeiten mehrerer Datenelemente zueinander oder eine zeitliche Abhängigkeit mehrerer Datenelemente ist.

In einer Ausführungsform ist die erste und/oder die zweite Schnittstelle als eine Schnittstelle gemäß einem I2C (Inter-Integrated Circuit)-, SPI (Serial Peripheral Interface)-, RS232 (Electronical Industries Alliance-232-F)-, RS485 (Electronical Industries Alliance-485)-, USB (Universal Serial Bus)-, SD-Karten (Secure Digital Memory Card)-Standard oder eine Internet-, Profinet IO (Input-Output)-, IP (Internet Protocoll)-, FTP (File Transfer Protocoll)-, scp (Secure Copy)-, HTTP (hypertext transfer protocoll)-, HTTPS(hypertext transfer protocoll secure)-, CoAP (Constrained Application Protocoll)-, OPC (OLE for Process Control)- oder OPC UA(OLE for Process Control Unified Architecture)-Standard ausgebildet ist.

In einer vorteilhaften Ausführungsform ist die Datenspeichervorrichtung in Form eines Speicherbausteins als feldprogrammierbare Logik-Gatter-Anordnung oder als anwendungsspezifische integrierte Schaltung oder als System auf einem integrierten Schaltkreis ausgebildet. Durch eine Realisierung in Hardware ist ein hoher Manipulationsschutz gegeben. Zudem ist eine solche Lösung relativ preiswert realisierbar. Ein Datenaustausch ist einfach durchführbar, da die Datenelemente mit Datenwerten einer Datei beispielsweise als Inhalt eines Speicherbausteins, insbesondere einer SD-Karte oder eines USB-Sticks, bereitgestellt werden.

Ausführungsbeispiele der erfindungsgemäßen Datenspeichervorrichtung sind in den Zeichnungen beispielhaft dargestellt und werden anhand der nachfolgenden Beschreibung näher erläutert.

Es zeigen
- Figur 1: eine erste Ausführungsform einer erfindungsgemäßen Datenspeichervorrichtung mit einer Speichereinheit und einer ersten bzw. einer zweiten Schnittstelle in schematischer Darstellung;
- Figur 2: eine zweite Ausführungsform einer erfindungsgemäßen Datenspeichervorrichtung mit einer Speichereinheit, die aus zwei getrennten Speicherkomponenten gebildet wird in schematischer Darstellung; und
- Figur 3: ein drittes Ausführungsbeispiel einer erfindungsgemäßen Datenspeichervorrichtung mit zwei Speicherbereichen für einen Datenaustausch in Hin- und Rückrichtung in schematischer Darstellung.

Aneinander entsprechende Teile sind in allen Figuren mit den gleichen Bezugszeichen versehen.

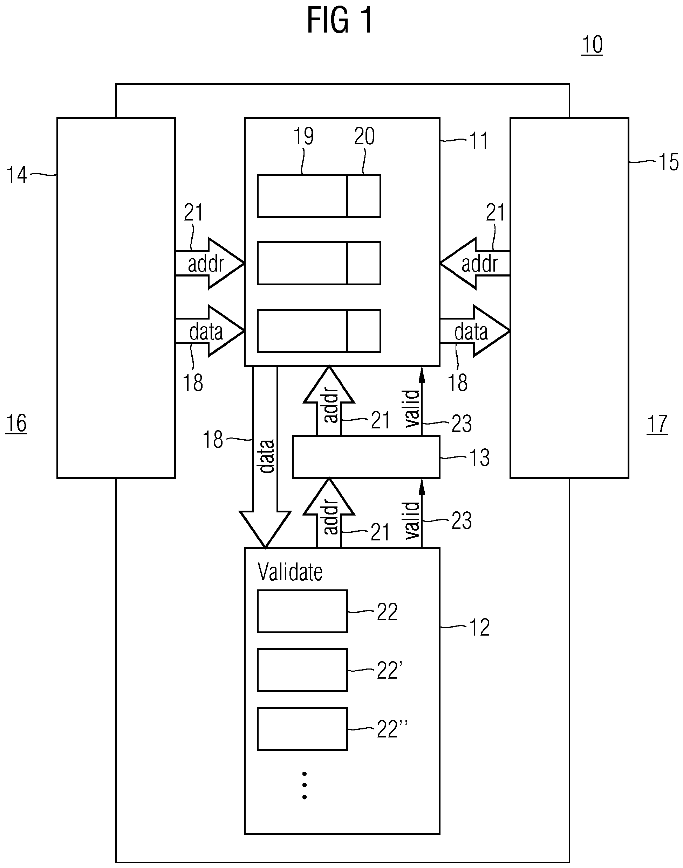

Figur 1 zeigt ein Ausführungsbeispiel einer Datenvalidierenden Datenspeichervorrichtung mit zwei Schnittstellen 14, 15 um Daten sicher zwischen zwei Sicherheitszonen 16, 17 auszutauschen. Der Datenaustausch erfolgt durch eine Datensynchronisation mit einer Datenvalidierung, bei der über eine erste Schnittstelle 14 erfasste Datenelemente 18 in eine erste Speichereinheit 11 eingelesen werden und erst nach einer Validierung für die zweite Schnittstelle 15 sichtbar geschaltet und somit auslesbar sind. Dadurch ist ein kontrollierter Datenaustausch zwischen einer externen Zone, hier Sicherheitszone 16, und einer Zone mit hohem Schutzbedarf, hier Sicherheitszone 17, in der beispielsweise Steuerungskommunikation zwischen Steuerungsgeräten oder auch eine Echtzeitkommunikation stattfindet, möglich. Eine Sicherheitszone kann dabei als geschlossenes Netzwerk betrieben werden, da keine Netzwerkkommunikation mit einer anderen Sicherheitszone realisiert wird. Es werden lediglich ausgewählte, projektierbare Datenelemente 18 für die zweite Sicherheitszone 17 bereitgestellt, soweit eine Datenvalidierung keine Auffälligkeiten ergeben hat. Dadurch wird ebenfalls Rückwirkungsfreiheit von einem externen Netzwerk, hier beispielsweise in Sicherheitszone 16, auf ein geschlossenes Netzwerk, hier Sicherheitszone 17, gewährleistet. Es werden keine Datenelemente übertragen, die einem bei der Validierung zugrunde liegenden Muster nicht entsprechen.

Die Speichereinheit 11 ist des Weiteren mit einer Validierungseinheit 12 und einer Zugriffskontrolleinheit 13 verbunden. Die Validierungseinheit 12 ist ebenfalls mit der Zugriffskontrolleinheit verbunden. Von der Speichereinheit 11 werden insbesondere die eingelesenen Datenelemente 18 an die Validierungseinheit 12 direkt oder in Kopie weitergereicht und dort gegenüber mindestens einem Muster geprüft und somit validiert. Von der Validierungseinheit 12 werden die validierten Datenelemente 18 und/oder Information über ein Validierungsergebnis, d.h. ob ein Datenelement gültig oder ungültige validiert wurde, an die Validierungseinheit 11 übergeben. Die Validierungseinheit 11 gibt diese Datenelemente und/oder Information dann an die Speichereinheit 11 weiter.

Die in Figur 1 dargestellte Datenspeichervorrichtung 10 umfasst eine erste Schnittstelle 14 über die Datenelemente 18 von einer Sicherheitszone 16 in eine Speicherzelle 19 der Speichereinheit 11 unter Angabe einer Speicheradresse 21, die eine Speicherzelle 19 kennzeichnet eingelesen werden. Die Speichereinheit 11 ist dabei so eingerichtet, dass von der ersten Schnittstelle 14 lediglich ein lesender Zugriff auf die Speichereinheit 11 möglich ist. Die Speichereinheit 11 ist weiterhin derart ausgebildet, dass von einer zweiten Schnittstelle 15, die mit der zweiten Sicherheitszone 17 in Kontakt steht, lediglich ein lesender Zugriff gewährt wird.

Die Speichereinheit 11 ist beispielsweise als DPRAM Speicher (Dual Port RAM) ausgebildet, der sowohl lesenden wie schreibenden Zugriff von beiden Schnittstellen 14, 15 zulässt. Hierbei kann dann auf Speicherzellenebene festgelegt werden, von welcher Seite ein lesender bzw. ein schreibender Zugriff zulässig ist.

In einer weiteren Variante kann auf eine Speicherzelle 19 sowohl von der ersten Schnittstelle 14, wie auch von der zweiten Schnittstelle 15 lesend und schreibend zugegriffen werden. Auch hier ist ein Lesezugriff auf den Inhalt der Speicherzelle erst nach erfolgreicher Validierung möglich. Gegebenenfalls kann die Validierung der Datenelemente, das heißt welche ein oder mehreren Muster zur Prüfung der Datenelemente verwendet werden, davon abhängen, ob der Schreibzugriff von der ersten Schnittstelle 14 oder von der zweiten Schnittstelle 15 erfolgt.

Die Validierungseinheit 12 ist ausgebildet um mindestens ein Muster 22 zu speichern. Weitere Muster 22', 22" können über eine nicht dargestellte Schnittstelle oder aber über die erste Schnittstelle 14 auf die Validierungseinheit 12 geladen und dort abgespeichert werden. Für eine Mehrzahl von Speicherzellen 19 oder auch jede einzelne Speicherzelle 19 sind/ist eine Validierungskonfiguration definierbar. Eine Validierungskonfiguration umfasst eine oder mehrere Muster 22, 22', 22", auf die ein oder mehrere Datenelemente 19 geprüft und nur bei Übereinstimmung als gültig validiert akzeptiert werden.

Muster 22, 22', 22" umfassen beispielsweise ein Format oder einen Dateityp des Datenelements oder einen Wertbereich, dem die Datenelemente entsprechen müssen. Ebenso kann ein Muster 22, 22', 22" vorbestimmte Prüfsummen für ein oder mehrere Datenelemente oder Abhängigkeiten mehrerer Datenelemente zueinander oder einer zeitlichen Abhängigkeit mehrerer Datenelemente umfassen. Bei einer Prüfung gegenüber einem Muster 22, 22', 22" mit Prüfsummen können die Prüfsummen entsprechend einer zyklischen Redundanzprüfung CRC oder auch durch einen Hash Algorithmus, beispielsweise den SHA1, oder durch kryptographische Nachrichtenintegritätscodes wie AES-CBC-MAC, HMAC-SHA1 oder durch digitale Signaturen ermittelt worden sein.

Bei einem Muster mit Abhängigkeiten mehrerer Datenelemente wird beispielsweise eine Reihenanalyse über mehrere Datenelemente 18 durchgeführt oder ein Quervergleich mit anderen Speicherzellen 19 beziehungsweise deren Datenelemente 18 durchgeführt. Bei einem Muster mit zeitlichen Abhängigkeiten wird beispielsweise der Zeitraum seit dem letzten Schreibzugriff gegenüber einem Sollwert überprüft.

Wird ein Datenelement 18 von der Validierungseinheit 12 als gültig verifiziert, wird eine Validierungsnachricht 23 unter Angabe der Speicheradresse 21 der Speicherzelle 19, in der das verifizierte Datenelement 18 abgelegt ist, an die Zugriffskontrolleinheit 13 gemeldet. Diese leitet die Adressinformation 21 und die Validierungsnachricht 23 an die Speichereinheit 11 weiter. Erst nach einer gültigen Validierung wird die Speicherzelle 19 mit einer Validierungskennung 20 versehen. Lediglich Speicherzellen 19 mit Validierungskennung 20 sind zum Auslesen über die Schnittstelle 15 freigegeben.

Wurde ein geschriebenes Datenelement 18 als ungültig validiert, stellt die Zugriffskontrolleinheit 13 einen Ersatzwert oder einen ungültigen Wert oder aber eine Zusatzinformation bereit und übergibt diese an die Speichereinheit 11, die somit über einen Nutzer der zweiten Sicherheitszone 17 über die zweite Schnittstelle 15 auslesbar ist. Bei einem oder einer bestimmten Anzahl von als ungültig validierten Datenelementen kann die Zugriffskontrolleinheit 13 auch alle oder einen Teil der als gültig validierten Datenelemente in gleicher Weise wie das als ungültig validierte Datenelement behandeln.

Zusätzlich oder alternativ kann die Zugriffskontrolleinheit 13 den schreibenden Zugriff auf die Speicherzelle 19 sperren, wenn ein oder mehrere Datenelemente 19 als ungültig validiert wurden. Dies wird durch die Validierungsnachricht 23 bzw. 123 im Ausführungsbeispiel 100, 200 der Datenspeichervorrichtung an die Speichereinheit 11, 111 mitgeteilt. Die Validierungsnachricht 123 im Ausführungsbeispiel 100, 200 der Datenspeichervorrichtung wird von der Zugriffskontrolleinheit 113 über die Validierungseinheit 112 oder auch direkt von der Zugriffskontrolleinheit 113, nicht dargestellt, an die erste Speicherkomponente 111 übermittelt.

Als weitere Option veranlasst die Zugriffskontrolleinheit 13 bei einem oder mehreren als ungültig validierten Datenelementen ein Zurücksetzen der Speicherzelle 19, die das als ungültig validierte Datenelement enthält. Alternativ kann ein Teilbereich der Speichereinheit 11 bei einem ungültig validierten Datenelement zurückgesetzt werden oder auch ein Zurücksetzen aller Speicherzellen 19 der Speichereinheit 11 veranlassen.

Alternativ deaktiviert die Zugriffskontrolleinheit 13 die gesamte Datenspeichervorrichtung 10.

Zum Auslesen einer Speicherzelle 19 übermittelt die zweite Schnittstelle 15 die Speicheradresse 21 der gewünschten Speicherzelle 19 und erhält im Gegenzug das angeforderte Datenelement 18. Speicherzellen 19 ohne Validierungskennung 20 sind für den Lesezugriff gesperrt. Dies stellt sicher, dass Speicherzellen 19 während der Validierung nicht ausgelesen werden können. Dadurch können ebenso Speicherzellen, die ungültig validiert wurden, gesperrt bleiben, da diese keine Validierungskennung 20 erhalten. Beim erneuten Beschreiben einer Speicherzelle über das erste Interface 14 wird die Validierungskennung 20 gelöscht.

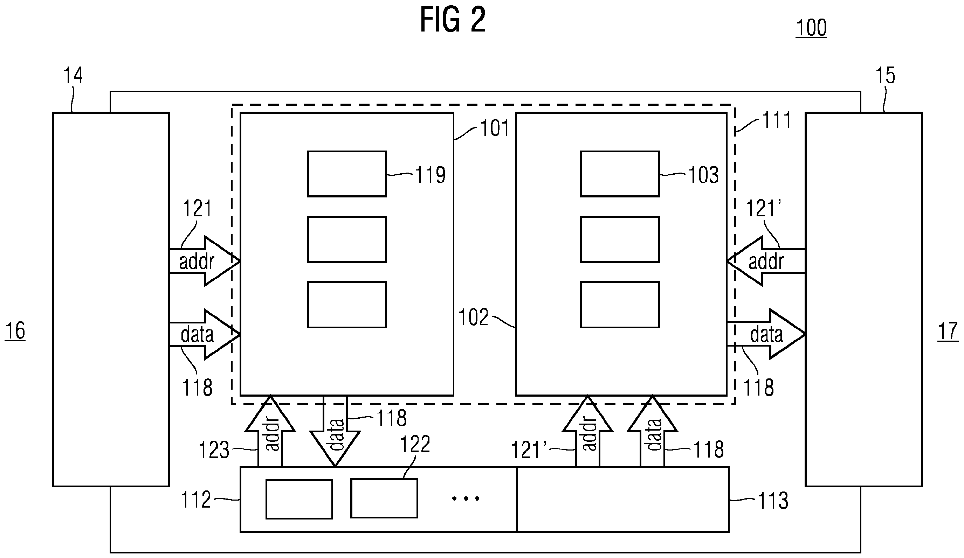

In Figur 2 ist eine weitere Ausführungsform der Datenspeichervorrichtung 100 dargestellt. Die Datenspeichervorrichtung 100 umfasst eine erste Schnittstelle 14 zu einer ersten Sicherheitszone 16 sowie eine zweite Schnittstelle 15 zu einer zweiten Sicherheitszone 17. Die Schnittstellen 14, 15 sind mit einer Speichereinheit 111 verbunden, die Speichereinheit 111 ist wiederum mit einer Validierungseinheit 112 und einer Zugriffskontrolleinheit 113 verbunden, die hier beispielsweise als integrierte Einheit ausgeführt sind.

Die Speichereinheit 111 umfasst eine erste Speicherkomponente 101, die lediglich eine Schnittstelle zur ersten Schnittstelle 14 aufweist. Über diese erste Schnittstelle ist ein Nur-Schreibzugriff auf die Speicherkomponente 101 möglich. Des Weiteren umfasst die Speichereinheit 111 eine zweite Speicherkomponente 102, die gegenüber der zweiten Schnittstelle 15 einen Nur-Lesezugriff aufweist. Über die erste Schnittstelle 14 eingelesene Datenelemente 118 werden in die Speicherzelle 119, die über die Adressinformation 121 bestimmt wird, abgelegt. Ein Datenaustausch zwischen der ersten Schnittstelle 14 und der zweiten Schnittstelle 15 erfolgt hier über ein Umkopieren der Datenelemente 118 von der ersten Speicherkomponente 101 in die Validierungseinheit 112.

In der Validierungseinheit 112 findet wie im vorherigen Ausführungsbeispiel 10 beschrieben eine Überprüfung der Datenelemente 118 anhand von Validierungsinformation, die ein oder mehrere Muster 122 umfasst, statt. Wird ein Datenelement 118 gültig validiert wird dieses Datenelement 118 über die Zugriffskontrolleinheit 113 an die zweite Speicherkomponente 102 unter Angabe der Adresse 121' der Speicherzelle 103 in die das Datenelement eingeschrieben wird, übergeben. Über die zweite Schnittstelle 15 kann dann unter Angabe der Speicheradresse 121' der Speicherzelle 103 das Datenelement 118 ausgelesen werden.

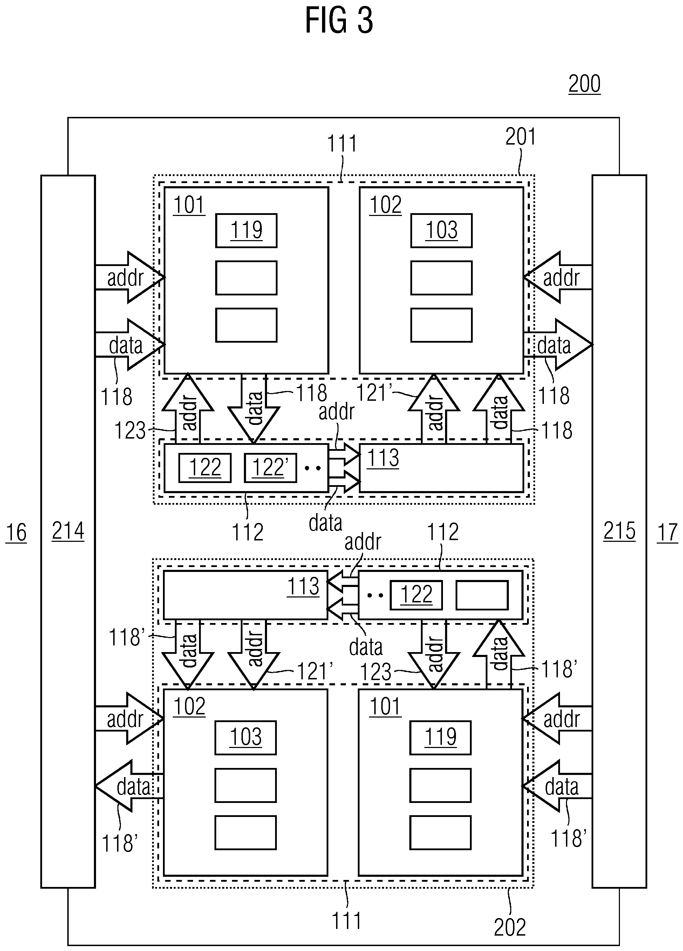

In diesem Ausführungsbeispiel ist die Validierungseinheit 112 und die Zugriffskontrolleinheit 113 als eine Komponente integriert ausgebildet. Eine separate Ausbildung wie in Figur 1 oder Figur 3 dargestellt ist ebenfalls möglich. Die Funktionen der Validierungseinheit 112 bzw. der Zugriffskontrolleinheit 113 entsprechen den Funktionen der Validierungseinheit 12 bzw. der Zugriffskontrolleinheit 13 des Ausführungsbeispiels 10. Es werden in dem Ausführungsbeispiel 100 die Datenelemente 118 selbst von der Validierungseinheit 112 auf die Zugriffskontrolleinheit 113 umkopiert und von dort an die zweite Speicherkomponente übergeben anstatt lediglich eine Validierungsnachricht 23 an die Speichereinheit 11 zu schicken und daraufhin eine Validierungskennung 20 der entsprechenden Speicherzelle zuzuweisen.

Um einen Datenaustausch in beide Richtungen zu ermöglichen, kann der interne Aufbau der Datenspeichervorrichtung 10, 100 gedoppelt und gespiegelt angeordnet werden. Eine solche Anordnung ist in Figur 3 dargestellt. Im Ausführungsbeispiel 200 einer in beide Richtungen einen Datenaustausch ermöglichenden Datenspeichervorrichtung ist eine erste Schnittstelle 214 zu einer ersten Sicherheitszone 16 sowie eine zweite Schnittstelle 215 zu einer zweiten Sicherheitszone 17 ausgebildet. Ein erster Speicherbereich 201 ermöglicht den Austausch von Daten von der ersten Sicherheitszone 16 zu einer zweiten Sicherheitszone 17, der zweite Speicherbereich 202 ermöglicht einen validierten Datenaustausch von der zweiten Sicherheitszone 17 über die zweite Schnittstelle 215 zur ersten Schnittstelle 214 und der dahinterliegenden ersten Sicherheitszone 16.

In der dargestellten Datenspeichervorrichtung 200 entspricht der erste sowie der zweite Speicherbereich 201, 202 jeweils einer Speichereinheit 111 der Datenspeichervorrichtung 100 zusammen mit jeweils einer Validierungseinheit 112 und einer Zugriffskontrolleinheit 113. Dabei sind hier die Validierungseinheit 112 und die Zugriffskontrolleinheit 113 als separate Komponenten ausgebildet. Beide Speicherbereiche 201, 202 arbeiten unabhängig voneinander. So können für die unterschiedlichen Richtungen unterschiedliche Muster 122, 122' und somit unterschiedliche Validierungsinformationen zur Prüfung der Datenelemente 118 definiert und validiert werden. Statt jeweils einer Validierungseinheit 112 und jeweils einer Zugriffskontrolleinheit 113 pro Speicherbereich 201, 202 und somit Übertragungsrichtung kann auch eine gemeinsame Validierungseinheit und/oder Zugriffskontrolleinheit, nicht abgebildet, ausgebildet sein. Ist lediglich eine Zugriffskontrolleinheit und eine Validierungseinheit für beide Richtungen ausgebildet, so sind darin für die verschiedenen Richtungen jeweils getrennte Muster beziehungsweise Validierungsinformationen enthalten und die Prüfung die Zugriffskontrollfunktionen werden gemäß den Vorschriften für die jeweilige Übertragungsrichtung angewandt.

Bei den Datenelementen, die über die Datenspeichervorrichtung 10, 100, 200 ausgetauscht werden, kann es sich insbesondere um Zustandsdaten, Diagnosedaten oder Steuerdaten eines Steuerungssystems handeln. Dies können insbesondere zyklisch zu schreibende beziehungsweise bereitzustellende Daten sein, sodass in einem vorbestimmten Zeitraster Daten zu schreiben beziehungsweise zu lesen sind. Bei den Daten kann es sich ebenso um Aktorwerte handeln, die in einer Steuerungsumgebung direkt als Eingabe für ein Steuerungsgerät anwendbar sind.

Die erste Schnittstelle 14, 214 und/oder die zweite Schnittstelle 15, 215 entsprechen beispielsweise dem I2C, SPI, RS232, RS435, USB, Speicherkartenschnittstelle oder Kommunikationsschnittstellen gemäß einem Ethernet, Profinet IO, IP, FTP, scp, HTTP, HTTPS, CoAP, OPC, OPC UA Standard.

In einer nicht dargestellten Variante umfasst die Datenspeichervorrichtung 10, 100, 200 eine dritte Schnittstelle, die von der ersten Sicherheitszone 16 zugänglich ist. Über diese dritte Schnittstelle können Datenelemente 18, 118, die über die erste Schnittstelle 14, 214, 215 auf die Speichereinheit 11 bzw. auf die erste nur schreibende Speicherkomponente 101 der Speichereinheit 111 geschriebene Datenelemente kopiert und ausgelesen werden. Damit kann ein "Mitlauschen" beziehungsweise Überwachen der schreibenden ersten Schnittstelle 14, 214, 215 überwacht werden. Dadurch ist eine Rückwirkungsfreiheit bei der Datenübertragung in die zweite Sicherheitszone 17 beziehungsweise beim Auslesen der Daten über die zweite Schnittstelle 15, 214, 215 gewährleistet. Es werden lediglich geschriebene Werte innerhalb einer Sicherheitszone abgehört ohne jedoch die Kommunikation innerhalb der Sicherheitszone zu beeinflussen.

Die Datenspeichervorrichtung 10, 100, 200 kann beispielsweise als Hardwarebaustein, insbesondere als feldprogrammierbare Logik-Gatter-Anordnung FPGA oder als anwendungsspezifische integrierte Schaltung ASIC oder als System auf einem integrierten Schaltkreis ausgebildet sein. Die beschriebenen Datenspeichervorrichtungen 10, 100, 200 können aber auch als datenvalidierende Speicherzugriffseinheit verwendet werden, die einen Lesezugriff auf einen Speicherbereich eines separaten Speicherbausteins nach einem Schreibzugriff sperrt und nach erfolgter Validierung freigibt.

Alle beschriebenen und/oder gezeichneten Merkmale können im Rahmen der Erfindung vorteilhaft miteinander kombiniert werden.

## Patentansprüche

1. Datenspeichervorrichtung zum geschützten Datenaustausch zwischen verschiedenen Sicherheitszonen (16, 17) mit einer Speichereinheit (11, 111), einer Validierungseinheit (12, 112) und einer Zugriffskontrolleinheit (13, 113), wobei die Speichereinheit (11, 111) eine erste Schnittstelle (14, 214) zu einer ersten Sicherheitszone (16) aufweist, über die Datenelemente (18, 118, 118') auf die Speichereinheit (11, 111) nur schreibbar sind, und die Speichereinheit (11, 111) eine zweite Schnittstelle (15, 215) zu einer zweiten Sicherheitszone (17) aufweist, über die Datenelemente (18, 118, 118') von der Speichereinheit (11, 111) nur auslesbar sind, die Validierungseinheit (12, 112) eingerichtet ist um die auf die Speichereinheit (11, 111) geschriebenen Datenelemente (18, 118, 118') auf Übereinstimmung mit einem vorbestimmten Muster (22, 22', 22", 122, 122') zu überprüfen und
die Zugriffskontrolleinheit (13, 113) eingerichtet ist um ein Auslesen der Datenelemente (18, 118, 118') aus der Speichereinheit (11, 111) erst dann zu ermöglichen, wenn die Datenelemente (18, 118, 118') als übereinstimmend befundenen und somit gültig validiert sind, wobei die Speichereinheit (11) eine Vielzahl von Speicherzellen (19) aufweist und jeder Speicherzelle (19) eine Validierungskennung (20) zuordenbar ist, wobei lediglich einer Speicherzelle (19) mit gültig validiertem Datenelement eine Validierungskennung (20) zugeordnet ist und die Speicherzelle (19) nur bei einer zugeordneten Validierungskennung (20) für einen lesenden Zugriff freigegeben ist.

2. Datenspeichervorrichtung nach Anspruch 1, wobei die Datenspeichervorrichtung (200) mehrere Speicherbereiche (201, 202) umfasst, ein Speicherbereich (201) eine Speichereinheit (11, 111) und/oder eine Validierungseinheit (12, 112) und/oder eine Zugriffseinheit (13, 113) umfasst, und jeder Speicherbereich (201, 202) Datenelemente (18, 118, 118') in jeweils unterschiedliche Richtung transportiert, und die mindestens eine Validierungseinheit (13, 113) die Datenelemente (18, 118, 118') für jede Richtung auf Übereinstimmung mit einem eigenen von der Gegenrichtung bzw. den anderen Richtungen unabhängigen Muster (22, 22', 22", 122, 122') prüft.

3. Datenspeichervorrichtung nach Anspruch 2, wobei die Speicherbereiche (201, 202) eine unterschiedliche Speicherkapazität aufweisen.

4. Datenspeichervorrichtung nach einem der Ansprüche 1 bis 3, wobei für ein geschriebenes Datenelement (18, 118, 118'), dessen Wert als ungültig validiert wurde, die Zugriffskontrolleinheit (13, 113) einen Ersatzwert oder einen ungültigen Wert oder eine Zusatz-Information bereitstellt.

5. Datenspeichervorrichtung nach einem der Ansprüche 1 bis 3, wobei die Zugriffskontrolleinheit (13, 113) den lesenden Zugriff auf ein Datenelement (18, 118, 118') sperrt, wenn dieses Datenelement (18, 118, 118') als ungültig validiert wurde.

6. Datenspeichervorrichtung nach Anspruch 4 oder 5, wobei die Zugriffskontrolleinheit (13, 113) bei einem oder einer bestimmten Anzahl als ungültig validierten Datenelement, alle oder einen Teil der als gültig validierten Datenelemente in gleicher Weise wie das als ungültig validierte Datenelement behandelt.

7. Datenspeichervorrichtung nach einem der Ansprüche 1 bis 6, wobei die Zugriffskontrolleinheit (13, 113) die komplette Datenspeichervorrichtung (10, 100, 200) deaktiviert, wenn ein oder mehrere geschriebene Datenelement (18, 118, 118') als ungültig validiert wurden.

8. Datenspeichervorrichtung nach einem der Ansprüche 1 bis 7, wobei die Zugriffskontrolleinheit (13, 113) den schreibenden Zugriff auf die Speichereinheit (11, 101) sperrt, wenn ein oder mehrere Datenelemente (18, 118, 118') als ungültig validierten wurden.

9. Datenspeichervorrichtung nach einem der Ansprüche 1 bis 8, wobei die Zugriffskontrolleinheit (13, 113) bei einem oder mehreren als ungültig validierten Datenelementen ein Zurücksetzten dieser Speicherzellen (19, 119) veranlasst, oder ein Zurücksetzten eines Teilbereichs veranlasst, in dem das ungültig validierte Datenelement abgespeichert ist, oder ein Zurücksetzen aller Speicherzellen der Speichereinheit (11, 111) veranlasst.

10. Datenspeichervorrichtung nach einem der Ansprüche 1 bis 9, wobei mindestens eine dritte Schnittstelle ausgebildet ist, die von der ersten Sicherheitszone (16) aus zugänglich ist und die die über die erste Schnittstelle (14, 214) von der ersten Sicherheitszone (16) auf die Speichereinheit (11, 111) geschriebenen Datenelemente (18, 118, 118') dupliziert und ausliest.

11. Datenspeichervorrichtung nach einem der Ansprüche 1 bis 10, wobei ein geschriebenes Datenelement (18, 118, 118') als Aktorwert ausgebildet ist und das in eine Steuerungsumgebung ausgelesene Datenelement (18, 118, 118') direkt als Eingabe anwendbar ist.

12. Datenspeichervorrichtung nach einem der Ansprüche 1 bis 11, wobei die Validierungseinheit (12, 112) eingerichtet ist um mehrere unterschiedliche Muster (22, 22', 22", 122, 122') zu speichern und/oder zu laden.

13. Datenspeichervorrichtung nach einem der Ansprüche 1 bis 12, wobei die Validierungseinheit (12, 112) Datenelemente (18, 118, 118') gegenüber mehreren Mustern (22, 22', 22", 122, 122') validiert und die Zugriffskontrolleinheit (13, 113) nur dann einen lesenden Zugriff erlaubt, wenn mindestens ein oder eine bestimmte Mindestanzahl von Mustern (22, 22', 22", 122, 122') oder eine logische Kombination von Mustern (22, 22', 22", 122, 122') gültig validiert sind.

14. Datenspeichervorrichtung nach einem der Ansprüche 1, 12 oder 13, wobei ein Muster (22, 22', 22", 122, 122') ein Format oder ein Dateityp oder ein Wertebereich oder eine gültige Prüfsumme oder eine Übereinstimmung von Abhängigkeiten mehrerer Datenelemente zueinander oder eine zeitliche Abhängigkeit mehrerer Datenelemente ist.

15. Datenspeichervorrichtung nach einem der Ansprüche 1 bis 14, wobei die erste und/oder die zweite Schnittstelle (14, 114, 214, 15, 115, 215) als eine Schnittstelle gemäß dem I2C-, SPI-, RS232-, RS435-, USB-, SD-Karten - Standard oder einem Ethernet-, Profinet IO-, IP-, FTP-, scp-, HTTP-, HTTPS-, CoAP-, OPC- oder OPC UA-Standard ausgebildet ist.

16. Datenspeichervorrichtung nach einem der Ansprüche 1 bis 15, wobei die Datenspeichervorrichtung (10, 100, 200) in Form eines Hardware-Bausteins als feldprogrammierbare Logik-Gatter-Anordnung oder als anwendungsspezifische integrierte Schaltung oder als System auf einem integrierten Schaltkreis ausgebildet ist.

## Claims

1. Data storage device for protected data exchange between different security zones (16, 17) comprising a storage unit (11, 111), a validation unit (12, 112) and an access control unit (13, 113), wherein the storage unit (11, 111) has a first interface (14, 214) to a first security zone (16), via which data elements (18, 118, 118') are only writable to the storage unit (11, 111), and the storage unit (11, 111) has a second interface (15, 215) to a second security zone (17) via which data elements (18, 118, 118') are only readable from the storage unit (11, 111), the validation unit (12, 112) is designed to check the data elements (18, 118, 118') written to the storage unit (11, 111) for correspondence with a predetermined pattern (22, 22', 22", 122, 122') and the access control unit (13, 113) is designed to enable the data elements (18, 118, 118') to be read out from the storage unit (11, 111) only if the data elements (18, 118, 118') are found to be corresponding and thus validly validated wherein the storage unit (11) has a multiplicity of memory cells (19) and a validation identifier (20) is assignable to each memory cell (19), wherein a validation identifier (20) is assigned only to a memory cell (19) with a validly validated data element and the memory cell (19) is enabled for a reading access only in the case of an assigned validation identifier (20).

2. Data storage device according to Claim 1, wherein the data storage device (200) comprises a plurality of storage regions (201, 202), a storage region (201) comprises a storage unit (11, 111) and/or a validation unit (12, 112) and/or an access unit (13, 113) and each storage region (201, 202) transports data elements (18, 118, 118') in respectively different directions, and the at least one validation unit (13, 113) checks the data elements (18, 118, 118') for each direction for correspondence with a dedicated pattern (22, 22', 22", 122, 122') independent of the opposite direction or the other directions.

3. Data storage device according to Claim 2, wherein the storage regions (201, 202) have a different storage capacity.

4. Data storage device according to any of Claims 1 to 3, wherein, for a written data element (18, 118, 118') whose value was validated as invalid, the access control unit (13, 113) provides a replacement value or an invalid value or an additional information item.

5. Data storage device according to any of Claims 1 to 3, wherein the access control unit (13, 113) blocks reading access to a data element (18, 118, 118') if said data element (18, 118, 118') was validated as invalid.

6. Data storage device according to Claim 4 or 5, wherein the access control unit (13, 113), in the case of one or a specific number of data elements validated as invalid, treats all or a portion of the data elements validated as valid in the same way as the data element validated as invalid.

7. Data storage device according to any of Claims 1 to 6, wherein the access control unit (13, 113) deactivates the complete data storage device (10, 100, 200) if one or a plurality of written data elements (18, 118, 118') were validated as invalid.

8. Data storage device according to any of Claims 1 to 7, wherein the access control unit (13, 113) blocks writing access to the storage unit (11, 101) if one or a plurality of data elements (18, 118, 118') were validated as invalid.

9. Data storage device according to any of Claims 1 to 8, wherein the access control unit (13, 113), in the case of one or a plurality of data elements validated as invalid, instigates a resetting of these memory cells (19, 119), or instigates a resetting of a partial region in which the data element validated as invalid is stored, or instigates a resetting of all the memory cells of the storage unit (11, 111).

10. Data storage device according to any of Claims 1 to 9, wherein at least one third interface is embodied which is accessible from the first security zone (16) and which duplicates and reads out the data elements (18, 118, 118') written via the first interface (14, 214) from the first security zone (16) to the storage unit (11, 111).

11. Data storage device according to any of Claims 1 to 10, wherein a written data element (18, 118, 118') is embodied as an actuator value and the data element (18, 118, 118') read out into a control environment is usable directly as input.

12. Data storage device according to any of Claims 1 to 11, wherein the validation unit (12, 112) is designed to store and/or to load a plurality of different patterns (22, 22', 22", 122, 122').

13. Data storage device according to any of Claims 1 to 12, wherein the validation unit (12, 112) validates data elements (18, 118, 118') with respect to a plurality of patterns (22, 22', 22", 122, 122'), and the access control unit (13, 113) allows a reading access only if at least one or a specific minimum number of patterns (22, 22', 22", 122, 122') or a logical combination of patterns (22, 22', 22", 122, 122') are validly validated.

14. Data storage device according to any of Claims 1, 13 or 13, wherein a pattern (22, 22', 22", 122, 122') is a format or a file type or a value range or a valid checksum or a correspondence of dependencies of a plurality of data elements with respect to one another or a temporal dependency of a plurality of data elements.

15. Data storage device according to any of Claims 1 to 14, wherein the first and/or the second interface (14, 114, 214, 15, 115, 215) are/is embodied as an interface in accordance with the I2C, SPI, RS232, RS435, USB, SD card standard or an Ethernet, Profinet 10, IP, FTP, scp, HTTP, HTTPS, CoAP, OPC or OPC UA standard.

16. Data storage device according to any of Claims 1 to 15, wherein the data storage device (10, 100, 200) is embodied in the form of a hardware assembly as a field programmable logic gate arrangement or as an application specific integrated circuit or as a system on an integrated circuit.

## Revendications

1. Dispositif de stockage de données permettant un échange de données protégé entre différentes zones de sécurité (16, 17), comportant une unité de mémoire (11, 111), une unité de validation (12, 112) et une unité de contrôle d'accès (13, 113), l'unité de mémoire (11, 111) présentant une première interface (14, 214) vers une première zone de sécurité (16), via laquelle des éléments de données (18, 118, 118') peuvent seulement être écrits sur l'unité de mémoire (11, 111), et l'unité de mémoire (11, 111) présentant une deuxième interface (15, 215) vers une deuxième zone de sécurité (17), via laquelle des éléments de données (18, 118, 118') peuvent seulement être lus par l'unité de mémoire (11, 111), l'unité de validation (12, 112) étant configurée pour vérifier si les éléments de données (18, 118, 118') écrits sur l'unité de mémoire (11, 111) coïncident avec un prédéterminé (22, 22', 22", 122, 122') et l'unité de contrôle d'accès (13, 113) étant configurée pour ne permettre une lecture des éléments de données (18, 118, 118') hors de l'unité de mémoire (11, 111) que si les éléments de données (18, 118, 118') sont jugés coïncidents et donc validés comme valables, l'unité de mémoire (11) comportant une pluralité de une pluralité de cellules de mémoire (19) et à chaque cellule de mémoire (19) pouvant être associé un identifiant de validation (20), un identifiant de validation (20) étant associé uniquement à une cellule de mémoire (19) avec un élément de données validé comme valable et la cellule de mémoire (19) n'étant libérée pour un accès en lecture que dans le cas d'un identifiant de validation associé (20).

2. Dispositif de stockage de données selon la revendication 1, le dispositif de stockage de données (200) comprenant plusieurs parties de mémoire (201, 202), une partie de mémoire (201) comprenant une unité de mémoire (11, 111) et/ou une unité de validation (12, 112) et/ou une unité d'accès (13, 113), et chaque partie de mémoire (201, 202) transportant des éléments de données (18, 118, 118') dans une direction respectivement différente, et l'au moins une unité de validation (13, 113) vérifiant si, pour chaque direction, les éléments de données (18, 118, 118') coïncident avec un propre schéma (22, 22', 22", 122, 122') indépendant de la direction inverse resp. des autres directions.

3. Dispositif de stockage de données selon la revendication 2, les parties de mémoire (201, 202) présentant une capacité de stockage différente.

4. Dispositif de stockage de données selon l'une des revendications 1 à 3, l'unité de contrôle d'accès (13, 113) fournissant, pour un élément de données écrit (18, 118, 118') dont la valeur a été validée non valable, une valeur de remplacement ou une valeur non valable ou une information supplémentaire.

5. Dispositif de stockage de données selon l'une des revendications 1 à 3, l'unité de contrôle d'accès (13, 113) bloquant l'accès en lecture à un élément de données (18, 118, 118') si cet élément de données (18, 118, 118') a été validé non valable.

6. Dispositif de stockage de données selon la revendication 4 ou 5, l'unité de contrôle d'accès (13, 113) traitant, dans le cas d'un élément de données validé comme non valable ou d'un certain nombre d'éléments de données validés comme non valables, tous les ou une partie des éléments de données validés comme valables de la même manière que l'élément de données validé comme non valable.

7. Dispositif de stockage de données selon l'une des revendications 1 à 6, l'unité de contrôle d'accès (13, 113) désactivant le dispositif de stockage de données complet (10, 100, 200) si un ou plusieurs éléments de données écrits (18, 118, 118') ont été validés comme non valables.

8. Dispositif de stockage de données selon l'une des revendications 1 à 7, l'unité de contrôle d'accès (13, 113) bloquant l'accès en écriture à l'unité de mémoire (11, 101) si un ou plusieurs éléments de données (18, 118, 118') ont été validés comme non valables.

9. Dispositif de stockage de données selon l'une des revendications 1 à 8, l'unité de contrôle d'accès (13, 113), dans le cas d'un ou de plusieurs éléments de données validés comme non valables, faisant réinitialiser ces cellules de mémoire (19, 119) ou réinitialiser une sous-partie dans laquelle est sauvegardé l'élément de données validé comme non valable ou faisant réinitialiser toutes les cellules de mémoire de l'unité de mémoire (11, 111).

10. Dispositif de stockage de données selon l'une des revendications 1 à 9, au moins une troisième interface étant réalisée qui est accessible depuis la première zone de sécurité (16) et qui duplique et lit les éléments de données (18, 118, 118') écrits via la première interface (14, 214) par la première zone de sécurité (16) sur l'unité de mémoire (11, 111).

11. Dispositif de stockage de données selon l'une des revendications 1 à 10, un élément de données écrit (18, 118, 118') étant réalisé en tant que valeur d'actionneur et l'élément de données (18, 118, 118') lu dans un environnement de commande pouvant être utilisé directement comme entrée.

12. Dispositif de stockage de données selon l'une des revendications 1 à 11, l'unité de validation (12, 112) étant configurée pour stocker et/ou charger plusieurs schémas différents (22, 22', 22", 122, 122').

13. Dispositif de stockage de données selon l'une des revendications 1 à 12, l'unité de validation (12, 112) validant des éléments de données (18, 118, 118') par rapport à plusieurs schémas (22, 22', 22", 122, 122') et l'unité de contrôle d'accès (13, 113) ne permettant un accès en lecture que si au moins un schéma ou un nombre minimum déterminé de schémas (22, 22', 22", 122, 122') ou une combinaison logique de schémas (22, 22', 22", 122, 122') ont été validés comme valables.

14. Dispositif de stockage de données selon l'une des revendications 1, 12 ou 13, un schéma (22, 22', 22", 122, 122') étant un format ou un type de données ou une plage de valeurs ou une somme de contrôle valable ou une coïncidence de dépendances de plusieurs éléments de données l'un par rapport à l'autre ou une dépendance temporelle de plusieurs éléments de données.

15. Dispositif de stockage de données selon l'une des revendications 1 à 14, la première et/ou la deuxième interface (14, 114, 214, 15, 115, 215) étant réalisées en tant qu'interface selon la norme I2C, SPI, RS232, RS435, USB, cartes SD ou une norme Ethernet, Profinet IO, IP, FTP, scp, HTTP, HTTPS, CoAP, OPC ou OPC UA.

16. Dispositif de stockage de données selon l'une des revendications 1 à 15, le dispositif de stockage de données (10, 100, 200) étant réalisé en forme de composant hardware en tant qu'ensemble de porte logique programmable par l'utilisateur ou en tant que circuit intégré spécifique à l'utilisation ou en tant que système sur un circuit intégré.
